# EUROPÄISCHE PATENTANMELDUNG

(11) **EP 4 631 771 A1**
(43) Veröffentlichungstag der Anmeldung: **15.10.2025**
(21) Anmeldenummer: 24169848.9
(22) Anmeldetag: 12.04.2024
(51) Int. Cl.: B60L 9/00, B60L 50/60, B60L 50/64, B60L 53/14

(54) **BAGGERSYSTEM, INSBESONDERE TUNNELVORTRIEBSSYSTEM**

(71) Anmelder: Wimmer Felstechnik Gesellschaft m.b.H., 5303 Thalgau (AT)
(72) Erfinder: Wimmer, Andreas, 5324 Faistenau (AT); Greisberger, Erich, 5303 Thalgau (AT)
(74) Vertreter: Puchberger & Partner Patentanwälte

(57) **Zusammenfassung**

Baggersystem, insbesondere Tunnelvortriebssystem, umfassend: einen Bagger (1) mit einem fahrbaren Unterwagen (2), einem bewegbar am Unterwagen angebrachten Oberwagen (3) und einem am Oberwagen bewegbar angebrachten Ausleger (4) zum Einsatz eines Arbeitswerkzeugs (5), und eine Steuerungsanordnung (6) zur Steuerung des Baggers (1) und seines Auslegers (4), wobei der Bagger (1) einen elektrischen Akku (7), einen Netzanschluss (8) zur Verbindung mit einer externen elektrischen Energiequelle (9) und einen Multikonverter (10) mit mehreren Betriebsmodi aufweist, wobei der Multikonverter (10) wahlweise in einem Netzmodus betreibbar ist, in dem die Energie zum Betrieb des Baggers (1) vom Netzanschluss (8) bezogen wird, wobei der Multikonverter (10) wahlweise in einem Akkumodus betreibbar ist, in dem die Energie zum Betrieb des Baggers (1) vom Akku (7) bezogen wird, und wobei der Multikonverter (10) wahlweise in einem Lademodus betreibbar ist, in dem der Akku (7) mit überschüssigem, nicht zum Betrieb des Baggers (1) benötigtem, Netzstrom geladen wird.

## Beschreibung

Die Erfindung betrifft ein System gemäß dem unabhängigen Patentanspruch.

Insbesondere werden Komponenten eines Baggersystems einzeln und in unterschiedlichen Kombinationen offenbart. Zudem werden Verfahrensschritte offenbart, die durch das Baggersystem oder durch einzelne Komponenten ausgeführt werden.

Baggersysteme, insbesondere Tunnelvortriebssysteme, sind in unterschiedlichen Ausführungsformen bekannt und publiziert. Bei bestimmten Tunnelbaumethoden, beispielsweise bei der neuen österreichischen Tunnelbaumethode, wird der Ausbruch durch einen Tunnelbagger erstellt. Der Bagger ist mit einem Arbeitswerkzeug versehen, das zum Vortrieb mit einem Ausleger an die Tunnelbrust geführt ist. Derartige Bagger umfassen meist einen fahrbaren Unterwagen, einen bewegbar am Unterwagen angebrachten Oberwagen und einen bewegbaren am Oberwagen angebrachten Ausleger zum Einsatz eines Arbeitswerkzeugs. Zur Steuerung des Baggers ist am Bagger eine Kabine für eine Bedienperson vorgesehen. Die Bedienperson kann über Bedienelemente den Bagger und damit den Tunnelausbruch steuern. Die hierfür notwendige Energie wird in der Regel von einem Verbrennungsmotor des Baggers bereitgestellt, der eine Hydraulikpumpe antreibt, wobei die einzelnen Antriebe des Baggers bevorzugt hydraulische Antriebe sind.

Aus wirtschaftlichen Gesichtspunkten ist ein effizienter und rascher Tunnelvortrieb von großer Wichtigkeit. Dies erfordert gemäß Stand der Technik den Einsatz von geschulten Bedienpersonen direkt im Ausbruchsbereich, die einerseits den Bagger für einen qualitativ hochwertigen und raschen Tunnelvortrieb bedienen, die andererseits aber auch den neu erstellten Tunnelausbruch sichern. Diese Bedienpersonen sind in der Praxis einem erheblichen Sicherheitsrisiko ausgesetzt. Einerseits besteht das Risiko einer Verletzung durch herabfallendes Gesteinsmaterial, andererseits aber auch durch den Bagger selbst. Dies durch Bewegungen des Baggers und zusätzlich durch dessen Emissionen.

Somit besteht ein Zielkonflikt zwischen wirtschaftlicher Optimierung und sicherheitstechnischer Optimierung beim Betrieb eines Baggers.

Aufgabe der Erfindung ist es nun, diesen Zielkonflikt zu lösen.

Die Aufgabe wird insbesondere durch die Merkmale des unabhängigen Patentanspruchs gelöst.

Eine erste Verbesserung kann dadurch erzielt werden, dass der Bagger vollelektrisch betrieben wird, also keinen Verbrennungsmotor aufweist, womit die Emissionen im Arbeitsbereich reduziert bzw. vermieden werden können. Herkömmliche elektrische Systeme arbeiten mit Schleppkabeln zur Verbindung des Baggers mit dem Stromnetz. Bei Verfahren des Baggers stellen diese Schleppkabel aber ein weiteres Sicherheitsrisiko dar.

Gemäß einer möglichen Ausführungsform der Anmeldung kann der Bagger alternativ zum Netzmodus, bei dem er über ein Kabel mit dem Stromnetz verbunden ist, in einem Akkumodus betrieben werden, in dem die Energie zum Betrieb des Baggers von einem am Bagger angebrachten Akku bezogen wird. Nicht benötigte Energie des Stromnetzes kann in einem Lademodus zum Laden des Akkus verwendet werden.

Dies bietet eine flexible Möglichkeit zur Nutzung des elektrisch betriebenen Baggers, der bevorzugt auch ohne angeschlossenes Stromnetz voll einsatzfähig ist. Dies erhöht die Effizienz der Vortriebsarbeit und die Sicherheit für die Bedienpersonen.

Der Akku selbst kann in einem Gehäuse vor mechanischer Beschädigung geschützt werden, um die Sicherheit weiter zu erhöhen. Um die Effizienz weiter zu verbessern, kann der Akku innerhalb eines Gehäuses einen Teil des Ausgleichsgewichts des Baggers bilden. Dadurch ist der Akku in synergetische Weise geschützt und wirkt als Ausgleichsgewicht.

Eine weitere Verbesserung kann dadurch erzielt werden, dass der Bagger durch eine Steuerungsanordnung fernsteuerbar ist. Dadurch müssen sich die Bedienpersonen nicht im Gefahrenbereich befinden. Bei herkömmlichen Systemen bedeutet dies jedoch, dass eine Bedienperson hinter dem Bagger steht, um diesen zu steuern. Hinter dem Bagger ist die Bedienperson jedoch den Emissionen eines herkömmlichen durch einen Verbrennungsmotor betriebenen Baggers ausgesetzt. Eine mögliche vollelektrische Ausführung eines Baggers, wie in der Anmeldung beschrieben, dient somit in synergetischer Weise auch dem Schutz einer Bedienperson eines ferngesteuerten Baggers.

Um die Sicherheit weiter zu verbessern, kann die Person den Bagger entfernt von dem Arbeitsbereich und entfernt von dem Gefahrenbereich über eine Funkfernsteuerung steuern. Diese Konfiguration kann optimal für die Sicherheit der Bedienpersonen sein. Bei herkömmlichen Baggern ist durch die Fernsteuerung jedoch die Effizienz und die Geschwindigkeit der Vortriebsarbeit herabgesetzt. So ist es für eine Bedienperson oft nicht möglich, den Bagger ohne Sicht auf die Tunnelbrust mit einer Funkfernsteuerung optimal zu steuern. Bei der vorgeschlagenen Konstruktion kann eine verbesserte Fernsteuerung vorgesehen sein, die beispielsweise den wesentlichen Elementen in der Kabine eines oder dieses Baggers nachempfunden ist. Dadurch kann die Bedienperson den Bagger im Wesentlichen so steuern, als würde er in selbigem sitzen.

Zur weiteren Verbesserung kann vorgesehen sein, dass auf einer Datenverarbeitungseinrichtung ein digitales 3D-Modell erstellt wird. Dieses 3D-Modell kann der Bedienperson, z. B. zusätzlich zu einem Kamerabild, wichtige Informationen zum effizienten Tunnelvortrieb liefern.

Offenbart wird unter anderem ein Baggersystem, insbesondere ein Tunnelvortriebssystem, umfassend:
- einen Bagger mit einem fahrbaren Unterwagen, einem bewegbar am Unterwagen angebrachten Oberwagen und einem am Oberwagen bewegbar angebrachten Ausleger zum Einsatz eines Arbeitswerkzeugs,
- und eine Steuerungsanordnung zur Steuerung des Baggers und seines Auslegers.

Bevorzugt weist der Bagger einen elektrischen Akku, einen Netzanschluss zur Verbindung mit einer externen elektrischen Energiequelle und einen Multikonverter mit wählbaren Betriebsmodi auf. Die externe elektrische Energiequelle ist bevorzugt das Stromnetz, und in der Regel das öffentliche Stromnetz.

Bevorzugt ist der Multikonverter wahlweise in einem Netzmodus betreibbar, in dem die Energie zum Betrieb des Baggers und insbesondere zur Bewegung des Unterwagens, des Oberwagens und des Auslegers, bevorzugt direkt und insbesondere ausschließlich, vom Netzanschluss bezogen wird.

Bevorzugt ist der Multikonverter wahlweise in einem Akkumodus betreibbar, in dem die Energie zum Betrieb des Baggers und insbesondere zur Bewegung des Unterwagens, des Oberwagens und des Auslegers, insbesondere ausschließlich, vom Akku bezogen wird.

Beim Betrieb des Baggers können die Bewegungen des Unterwagens, des Oberwagens und des Auslegers relativ zueinander und bevorzugt unabhängig voneinander erfolgen bzw. gesteuert werden.

Bevorzugt ist der Multikonverter wahlweise in einem Lademodus betreibbar, in dem der Akku mit überschüssigem, nicht zum Betrieb des Baggers benötigtem oder verwendetem, Netzstrom geladen wird.

Auch hierbei kann der Betrieb des Baggers eine Bewegung des Unterwagens, des Oberwagens und des Auslegers umfassen.

Bevorzugt wird im Lademodus die Energie zum Betrieb des Baggers und insbesondere zur Bewegung des Unterwagens, des Oberwagens und des Auslegers, vom Netzanschluss bezogen.

Bevorzugt ist der der Multikonverter wahlweise in einem Versorgungsmodus betreibbar, in dem im Akku gespeicherte Energie über einen Versorgungsanschluss anderen Verbrauchern zur Verfügung gestellt wird.

Bevorzugt wird der Bagger in einem Netzmodus derart betrieben, dass die Energie zum Betrieb des Baggers und insbesondere zur Bewegung des Unterwagens, des Oberwagens und des Auslegers, bevorzugt direkt und bevorzugt ausschließlich, vom Netzanschluss bezogen wird.

Bevorzugt wird der Bagger in einem Akkumodus derart betrieben, dass die Energie zum Betrieb des Baggers und insbesondere zur Bewegung des Unterwagens, des Oberwagens und des Auslegers, bevorzugt ausschließlich, vom Akku bezogen wird.

Bevorzugt wird der Bagger in einem Lademodus derart betrieben, dass der Akku mit überschüssigem, nicht zum Betrieb des Baggers benötigtem oder verwendetem, Netzstrom geladen wird.

Bevorzugt wird der Bagger in einem Versorgungsmodus derart betrieben, dass im Akku gespeicherte Energie über einen Versorgungsanschluss anderen Verbrauchern zur Verfügung gestellt wird.

Bevorzugt ist der Bagger vollelektrisch betrieben und die benötigte Energie zur Bewegung des Unterwagens, des Oberwagens und des Auslegers wird ausschließlich über den Netzanschluss von einer externen elektrischen Energiequelle und/oder über den Akku bezogen.

Gegebenenfalls ist vorgesehen, dass der Bagger zur Bewegung des Unterwagens, des Oberwagens und des Auslegers ein Hydrauliksystem umfasst.

Gegebenenfalls ist vorgesehen, dass das Hydrauliksystem eine Hydraulikpumpe zur Herstellung des Hydrauliksystemdrucks aufweist.

Gegebenenfalls ist vorgesehen, dass die Hydraulikpumpe rein elektrisch angetrieben und über den Multikonverter mit Strom versorgt ist.

Gegebenenfalls ist vorgesehen, dass der Multikonverter eine insbesondere als Inverter ausgebildete Motorsteuerung für die Hydraulikpumpe aufweist, - wobei die Motorsteuerung Motorparameter wie Leistung, Drehzahl, Motordrehmoment und/oder Parameter der Verstellpumpe steuert bzw. regelt.

Gegebenenfalls ist vorgesehen, dass der Multikonverter einen DCDC-Konverter zur Regelung der Akkuversorgung in beide Richtungen also zum Laden und zum Entladen des Akkus aufweist.

Gegebenenfalls ist vorgesehen, dass der Bagger einen Kabelhalter zur Halterung des Kabels für den Netzanschluss aufweist.

Gegebenenfalls ist vorgesehen, dass der Kabelhalter schwenkbar am Oberwagen angebracht ist und in Richtung eines entfernt vom Bagger vorgesehenen Fixpunktes der Anbringung des Kabels ausgerichtet bleibt, wenn sich der Oberwagen bewegt.

Gegebenenfalls ist vorgesehen, dass der Bagger als Tunnelbagger ausgebildet ist.

Gegebenenfalls ist vorgesehen, dass der Unterwagen über Raupen fahrbar ist.

Gegebenenfalls ist vorgesehen, dass der Oberwagen gegenüber dem Unterwagen um eine Hochachse schwenkbar angeordnet ist.

Gegebenenfalls ist vorgesehen, dass der Ausleger ein Tunnelausleger für Vortriebsarbeiten in kleinen Querschnitten ab 6 m² Querschnittsfläche ist,

Gegebenenfalls ist vorgesehen, dass der Ausleger einen Hubarm zum Anheben und Absenken des Auslegers umfasst.

Gegebenenfalls ist vorgesehen, dass der Ausleger Drehlager zum Verschwenken des Auslegers um eine Längsachse umfasst.

Gegebenenfalls ist vorgesehen, dass der Ausleger einen Löffelstiel umfasst.

Gegebenenfalls ist vorgesehen, dass der Ausleger eine Schnellwechselvorrichtung zur lösbaren Befestigung eines Arbeitswerkzeugs umfasst.

Gegebenenfalls ist vorgesehen, dass der Ausleger das Arbeitswerkzeug und insbesondere einen Vortriebslöffel oder eine Vortriebsfräse umfasst.

Gegebenenfalls ist vorgesehen, dass der Bagger eine Kabine für eine Person umfasst oder kabinenlos ausgebildet ist.

Gegebenenfalls ist vorgesehen, dass der Bagger ein Gegengewicht für den Ausleger umfasst. Das Gegengewicht ist bevorzugt exzentrisch im Außenbereich des Oberwagens angeordnet.

Gegebenenfalls ist vorgesehen, dass der Akku ein Teil des Gegengewichts ist.

Gegebenenfalls ist vorgesehen, dass das Gegengewicht ein Gehäuse mit einem Innenraum umfasst.

Gegebenenfalls ist vorgesehen, dass der Akku im Innenraum angeordnet oder anordenbar ist und von dem Gehäuse geschützt ist.

Gegebenenfalls ist vorgesehen, dass eine Dämpferanordung vorgesehen ist, über die der Akku schwingungsgedämpft am Bagger bzw. im Gehäuse angebracht ist.

Gegebenenfalls ist vorgesehen, dass die Steuerungsanordnung eine Fernsteuerung, insbesondere eine Funkfernsteuerung bzw. Telefernsteuerung, zur Steuerung des Baggers umfasst.

Gegebenenfalls ist vorgesehen, dass die Steuerungsanordnung eine Sensoranordnung zur Erfassung der Lage und/oder Bewegung des Arbeitswerkzeugs umfasst.

Gegebenenfalls ist vorgesehen, dass die Sensoranordnung zur Erfassung der Stellung des Baggers, insbesondere der Stellung des Auslegers, des Oberwagens und gegebenenfalls des Unterwagens ausgebildet ist.

Gegebenenfalls ist vorgesehen, dass die Steuerungsanordnung ein auf einer Datenverarbeitungseinrichtung erzeugtes digitales 3D-Modell umfasst.

Gegebenenfalls ist vorgesehen, dass das 3D-Modell ein 3D-Arbeitsmodell der, insbesondere durch die Sensoranordnung aufgenommenen, realen Bewegung des Arbeitswerkzeugs umfasst.

Gegebenenfalls ist vorgesehen, dass das 3D-Modell ein aus dem 3D-Arbeitsmodell errechnetes, den Arbeitsfortschritt, insbesondere den Tunnelausbruch, simulierendes 3D-Vortriebsmodell umfasst.

Gegebenenfalls ist vorgesehen, dass die Fernsteuerung Bedienelemente zur Steuerung des Baggers umfasst.

Gegebenenfalls ist vorgesehen, dass die Bedienelemente den realen Bedienelementen eines oder des Baggers nachgebildet sind oder entsprechen.

Gegebenenfalls ist vorgesehen, dass die Fernsteuerung eine Nachbildung der für die Steuerung wesentlichen Elemente der Kabine eines oder des Baggers ist.

Gegebenenfalls ist vorgesehen, dass die Fernsteuerung eine Bildwiedergabevorrichtung wie insbesondere einen Monitor oder eine VR-Brille umfasst.

Gegebenenfalls ist vorgesehen, dass auf der Bildwiedergabevorrichtung ein Bild des Arbeitsbereichs des Baggers angezeigt wird, das beispielsweise von einer am Bagger angebrachten Kamera in Echtzeit an die Bildwiedergabevorrichtung übertragen wird.

Gegebenenfalls ist vorgesehen, dass auf der Bildwiedergabevorrichtung zusätzlich ein Abbild des 3D-Vortriebsmodells des Arbeitsbereichs des Baggers angezeigt wird.

Gegebenenfalls ist vorgesehen, dass das Bild des Arbeitsbereichs von dem Abbild des 3D-Vortriebsmodells, bevorzugt im Wesentlichen in Echtzeit, überlagert ist.

Gegebenenfalls ist vorgesehen, dass die Fernsteuerung eine Bewegungsvorrichtung wie einen Drehteller und/oder einen Hexapod umfasst, die die Bedienperson bzw. die Kabine der Fernsteuerung bewegt, um eine realitätsnahe Steuerung des Baggers zu simulieren. Insbesondere werden dabei die Bewegungen des realen Baggers simuliert.

Gegebenenfalls ist vorgesehen, dass am Bagger oder im Bereich des Baggers ein Mikrofon vorgesehen ist, das ein Arbeitsgeräusch des Baggers an die Fernsteuerung bzw. an eine Tonwiedergabevorrichtung wie einen Lautsprecher der Fernsteuerung überträgt, um der Bedienperson akustische Informationen zu übermitteln.

Das Baggersystem umfasst eine Anordnung mehrerer Bestandteile, insbesondere einen Bagger, ein Steuerungssystem und deren Komponenten.

Beschrieben wird ein elektrisches Antriebssystem für einen Bagger. Das elektrische Antriebssystem kann wahlweise über eine Netz- und/oder eine Akkuversorgung betrieben werden. Das elektrische Antriebssystem ist bevorzugt zum vollelektrischen Antrieb eines Baggers geeignet. Dies bedeutet insbesondere, dass das Verfahren des Unterwagens, die Bewegung des Oberwagens gegenüber dem Unterwagen und auch die Bewegung des Auslegers und dessen Arbeitswerkzeug, elektrisch betrieben werden kann. Ein Verbrennungsmotor kann dabei entfallen. Bevorzugt kann das elektrische Antriebssystem den Bagger auch dann betreiben, wenn die Energie ausschließlich vom Akku bezogen wird. Der Bagger kann dabei bevorzugt ohne funktionelle Einschränkung elektrisch betrieben werden. Die Kapazität des Akkus für eine Tunnelvortriebsmaschine kann beispielsweise 52 kWh betragen, wenn beispielsweise eine 50 kW Motorleistung benötigt wird.

Beschrieben wird ein Multikonverter des elektrischen Antriebssystems bzw. eines Baggers. Der Multikonverter ist bevorzugt ein integrierter Multikonverter, der ein Teil des elektrischen Antriebssystems ist und der insbesondere am Bagger verbaut ist. Der Multikonverter erlaubt es, den Bagger bzw. das Antriebssystem in unterschiedlichen Betriebsmodi zu betreiben. Durch die unterschiedlichen Modi kann ein flexibler elektrischer Betrieb des Baggers erfolgen, womit einerseits die Arbeitssicherheit, andererseits aber auch die Effizienz beim Arbeitsfortschritt verbessert wird. Im Netzmodus dient der Strom aus einem Stromnetz zur Versorgung des elektrischen Antriebssystems bzw. des Baggers. Im Lademodus kann nicht verwendeter Strom des Netzes dazu verwendet werden, den Akku des elektrischen Antriebssystems bzw. des Baggers zu laden. Im Akkumodus wird das elektrische Antriebssystem bzw. der Bagger ausschließlich mit der elektrischen Ladung des Akkus betrieben. Bevorzugt ist hierbei ein Vollbetrieb des Antriebssystems bzw. des Baggers möglich. Der Akku ist derart dimensioniert, dass die Kapazität für eine ausreichende Zeit ohne Netzversorgung ausreicht. Dies umfasst beispielsweise die Bewegung des Unterwagens, die Bewegung des Oberwagens, oder auch die Bewegung des Auslegers samt Arbeitsgerät.

Beispielsweise soll der Akku derart dimensioniert sein, dass der Bagger rein mit der Energie des Akkus von der Tunnelbrust in einen sicheren Bereich und wieder zurück zur Tunnelbrust fahren kann. Insbesondere soll dabei auch ein Werkzeugwechsel vorgenommen werden können. Der Werkzeugwechsel erfolgt bevorzugt durch Bewegung des Auslegers. Dieser Vorgang kann beispielsweise 5 bis 10 Minuten oder mehr Fahrzeit enthalten. Die Akkukapazität kann darauf ausgelegt sein. In einer bevorzugten Ausführungsform kann dies als minimale Kapazität angenommen werden.

Bevorzugt wird der Akku auf eine Mindestdauer einer Fahrt von 10 Minuten, von 20 Minuten, von mehr als 30 Minuten oder von mehr als einer Stunde, inklusive Energie für einen Werkzeugwechsel ausgelegt. Diese Kapazität reicht dann auch aus, rein mit der Energie des Akkus, Arbeiten mit dem Werkzeug durchzuführen.

Allgemein kann die Kapazität des Akkus je nach Antriebsleistung des Baggers beispielsweise auf mehr als eine viertel Stunde, auf mehr als eine halbe Stunde oder mehr als eine Stunde Betrieb ausgelegt sein. Bei einem beispielhaften Bagger mit einem elektrischen 50kW Antrieb kann also beispielsweise ein Akku mit einer Kapazität von mehr als 12,5kWh, von mehr als 25kWh oder von mehr als 50kWh eingesetzt werden.

Im Versorgungsmodus kann der Akku und insbesondere auch der Multikonverter dafür verwendet werden, andere Verbraucher mit Strom zu versorgen. Beispielsweise kann ein Versorgungsanschluss im Sinne eines Microgrids 400 V bei 50 Hz liefern.

Das Umschalten zwischen den Betriebsmodi kann manuell oder automatisch erfolgen. Beispielsweise kann in den Netzmodus umgeschaltet werden, wenn der Netzstecker mit dem Stromnetz verbunden wird. Beispielsweise kann in den Akkumodus umgeschaltet werden, wenn der Netzstecker vom Stromnetz getrennt wird. Beispielsweise kann in den Lademodus geschaltet werden, wenn der Akku eine bestimmte Mindestladung unterschreitet. Gegebenenfalls wird in dem Lademodus die Leistung für andere Verbraucher des Baggers reduziert, um ausreichend Energie für einen gleichmäßigen, durchgehenden Ladevorgang des Akkus zur Verfügung zu haben.

Bevorzugt ist ein Netzanschluss mit Leistungsschalter vorgesehen, der bei Maschinenstart aktiviert wird und der gegebenenfalls auch eine Erkennung der Netzversorgung umfasst.

Gegebenenfalls ist ein Netzfilter (EMV-Filter) zur Reduzierung von Störfrequenzen durch AFE (bei AC/DC-Wandler) vorgesehen.

Gegebenenfalls ist ein DC-Link vorgesehen, der als Zwischenkreis die unterschiedlichen Betriebsmodi des Multikonverters ermöglicht.

Gegebenenfalls ist ein AFE (Active Front End) vorgesehen, das die Netzspannung für den Zwischenkreis umwandelt.

Gegebenenfalls wandelt das AFE die Netzspannung im Zwischenkreis in ein AC-Netz zur Herstellung eines separaten Versorgungsnetzes.

Die Leistungsregelung des Antriebes, insbesondere der Hydraulikpumpe, erfolgt mittels einer Motorsteuerung, bevorzugt mittels eines Inverters. Die genaue Regelung von Motordrehzahl, Motordrehmoment und Verstellpumpe der Hydraulik ist abhängig von der Betriebsart und der Betriebsanforderung. Bevorzugt ist vorgesehen, dass die Hydraulikpumpe die Versorgung des gesamten Baggers bereitstellt und keine Begrenzung der Maschinenfunktionalität je nach Betriebsmodus erfolgt.

Gegebenenfalls ist ein DCDC-Converter vorgesehen, der die Akkuversorgung in beide Richtungen, also zum Laden und zum Entladen des Akkus, regelt bzw. steuert.

Gegebenenfalls ist eine PDU (Power Distribution Unit) zur Aktivierung des Akkusystems vorgesehen.

Gegebenenfalls ist ein Isolationswächter vorgesehen, der bei Akkubetrieb aktiv ist.

Gegebenenfalls ist ein DCDC-Converter zur Herstellung und Versorgung eines Bordnetzes mit 24 V DC Steuerspannung vorgesehen.

Der Bagger kann einen Unterwagen, einen Oberwagen und einen Ausleger umfassen. Bevorzugt ist der Oberwagen gegenüber dem Unterwagen um ein Schwenkgelenk, insbesondere über einen Drehkranz, schwenkbar. Der Unterwagen kann bevorzugt über Raupen verfahren werden.

Der Ausleger ist bevorzugt ein Tunnelausleger für Vortriebsarbeiten eines Tunnels, insbesondere für kleine Tunnelquerschnitte ab ca. 6 m² Querschnittsfläche.

Beschrieben wird eine Steuerungsanordnung für einen Bagger. Die Steuerungsanordnung kann eine Fernsteuerung umfassen. Die Fernsteuerung kann eine einfache Fernsteuerung sein, die ein mobiles Bedienpult umfasst, das von einer Bedienperson bedient wird. Die Bedienperson steht hierbei bevorzugt in einem geschützten Bereich entfernt vom Bagger, jedoch mit Sicht auf den Arbeitsbereich und insbesondere auf die Tunnelbrust.

Alternativ oder zusätzlich kann die Steuerungsanordnung weitergehende Elemente umfassen, die den Bedienelementen eines Baggers nachempfunden sind. So kann die Fernsteuerung beispielsweise den wesentlichen Komponenten einer Baggerkabine nachempfunden werden. Die Person kann dadurch dieselben oder ähnliche Bedienelemente bedienen, die sie normalerweise in einem Bagger für dieselben Tätigkeiten bedienen würde. Insbesondere kann die Fernsteuerung Handhebel, Fußhebel und auch einen Sitz für die Bedienperson umfassen.

Die Übertragung der Steuerdaten von der Fernsteuerung an den Bagger erfolgt in allen Ausführungsformen bevorzugt drahtlos.

Bevorzugt umfasst die Steuerungsanordnung eine Bildwiedergabevorrichtung. Diese kann ein Bild wiedergeben, das von einer Kamera aufgenommen wird, die beispielsweise am Bagger angebracht ist. Die Bedienperson kann bei der Fernsteuerung dadurch jenes Bild sehen, das sie üblicherweise auch sieht, wenn sie sich in der Kabine eines Baggers befindet. Das Bild ist bevorzugt das bewegte Bild einer Videokamera. Das Bild wird insbesondere in Echtzeit von der Bildwiedergabevorrichtung wiedergegeben.

Gegebenenfalls wird auch das Arbeitsgeräusch des Baggers an die Fernsteuerung übertragen, womit die Bedienperson auch akustische Informationen bekommt. Hierfür kann am Bagger oder im Bereich des Baggers ein Mikrofon vorgesehen sein und im Bereich der Fernsteuerung ein Lautsprecher.

Beschrieben wird eine Datenverarbeitungseinrichtung, die ein digitales 3D-Modell erzeugt. Das digitale 3D-Modell kann ein 3D-Arbeitsmodell umfassen. Hierbei werden die realen Bewegungen des Arbeitswerkzeugs, insbesondere des gesamten Baggers, durch eine Sensoranordnung aufgenommen und diese Sensordaten dienen als Eingangsparameter für ein entsprechendes 3D-Modell. Beispielsweise können Neigungssensoren auf den beweglichen Komponenten des Baggers vorgesehen sein. Durch ein virtuelles (digitales) kinematisches Modell des Baggers kann in Kombination mit den Daten der Sensoranordnung die Kontur der Bewegung des Arbeitswerkzeugs abgeleitet werden.

Die Sensoren können beispielsweise Winkelsensoren sein, die Absolutwinkel oder Relativbewegungen zur nächsten Komponente in dem kinematischen System des Baggers erfassen. Gegebenenfalls kann auch ein Absolut-Lagesensor durch eine Kamera vorgesehen sein.

Beispielsweise können an einer Komponente des Baggers, beispielsweise am Oberwagen, Referenzpunkte angebracht sein, die von einer optischen Erfassungseinrichtung aufgenommen werden, um ein Referenzsystem zu definieren. Von diesem Referenzsystem und den Daten der Winkelsensoren kann dann die Bewegung des Arbeitswerkzeugs errechnet werden.

Die Übertragung der Sensordaten an die Datenverarbeitungseinrichtung erfolgt in allen Ausführungsformen bevorzugt drahtlos.

Gegebenenfalls kann die Bewegung des Arbeitswerkzeugs durch eine beliebige Technologie wie beispielsweise auch über Laserscanner oder Lidarscanner erfasst werden.

Gegebenenfalls umfasst das 3D-Modell ein 3D-Vortriebsmodell. Dieses entspricht im Wesentlichen einem virtuellen 3D-Modell des Arbeitsfortschritts und insbesondere des Tunnelausbruchs. Es entspricht im Wesentlichen einem 3D-Modell des Reliefs des Tunnelausbruchs und insbesondere der Tunnelbrust. Bevorzugt wird das 3D-Vortriebsmodells durch die Bewegung des virtuellen Arbeitswerkzeugs des 3D-Arbeitsmodells berechnet bzw. erstellt. Es kann näherungsweise davon ausgegangen werden, dass in allen Bereichen, durch die das Arbeitswerkzeug hindurchgeführt wurde, kein Gesteinsmaterial mehr vorgesehen ist. Durch eine einfache 3D-Modellierung kann aus der Einhüllenden der Bewegungskontur des Arbeitswerkzeugs im 3D-Arbeitsmodell das 3D-Vortriebsmodell errechnet werden. Dies geschieht z. B. ähnlich einem 3D-CAD-Programm, bei dem ein Ausschnitt durch Bewegungen und geometrische Subtraktion eines geometrischen Körpers erstellt wird.

Gegebenenfalls ist vorgesehen, dass auf der Bildwiedergabevorrichtung ein Kamerabild des Arbeitsbereichs und insbesondere der Tunnelbrust dargestellt wird. Bevorzugt wird zusätzlich ein Abbild des 3D-Vortriebmodells angezeigt. Dies kann beispielsweise in Form einer Augmented-Reality-Darstellung erfolgen.

Die Datenverarbeitungseinrichtung kann in einer sicheren Umgebung, beispielsweise an der Fernsteuerung, angeordnet sein. Hierbei werden die Daten der Sensoranordnung bevorzugt drahtlos oder über eine Datenleitung an die Datenverarbeitungseinrichtung übertragen.

Alternativ kann die Datenverarbeitungseinrichtung im Bagger integriert sein. Dies ermöglicht eine rasche und sichere Datenübertragung von der Sensoranordnung an die Datenverarbeitungseinrichtung über ein Kabel. Am Bagger angebrachte Sensoren können dabei die Daten über ein Kabel direkt an die Datenverarbeitungseinrichtung übertragen. Die Verbindung mit der Fernsteuerung kann dann beispielsweise drahtlos oder über eine Datenleitung erfolgen.

Auf der Bildwiedergabevorrichtung werden die optischen Daten, also das Kamerabild und/oder das Abbild des 3D-Modells, bevorzugt im Wesentlichen in Echtzeit oder mit kleiner Verzögerung von z.B. weniger als 1s angezeigt.

Gegebenenfalls ist zumindest eines der Bedienelemente ein "force feedback" Bedienelement.

Ähnlich einem Simulator kann eine Bedienperson den Bagger durch die Fernsteuerung steuern, wobei die Fernsteuerung im Wesentlichen einer Kabine eines Baggers samt Außensicht und Bedienelementen nachempfunden ist.

Dabei kann gegebenenfalls auch eine Bewegungsvorrichtung wie ein Drehteller und/oder ein Hexapod vorgesehen sein, die die Bedienperson bzw. die Kabine der Fernsteuerung bewegt, um eine realitätsnahe Steuerung des Baggers zu simulieren.

Gegebenenfalls umfasst der Ausleger eine integrierte Schnellwechseleinrichtung für den Anbau verschiedener, anwendungsspezifischer Arbeitswerkzeuge für Vortriebsarbeiten gemäß NATM (New Austrian Tunneling Method).

Gegebenenfalls umfasst der Bagger eine Anschlussmöglichkeit zur hydraulischen und elektrischen Versorgung der Arbeitswerkzeuge.

Gegebenenfalls umfasst der Bagger eine integrierte Feuerlöschanlage.

Gegebenenfalls kann der Bagger als Hebezeug, beispielsweise für einen Einbau von Tunnelausbaubögen zur statischen Sicherung, eingesetzt werden.

Gegebenenfalls umfasst der Bagger Sperrventile an den Hydraulikzylindern des Auslegers für das Halten der Auslegerposition beispielsweise im Bohrbetrieb.

Gegebenenfalls umfasst der Bagger eine integrierte Zentralschmieranlage zur Versorgung der Lagerstellen im Ausleger und im Oberwagen.

Gegebenenfalls umfasst der Bagger einen verstärkten Unterwagen und/oder verstärkte Raupen, insbesondere Kettenlaufwerke inkl. Abstreiferbleche.

Gegebenenfalls umfasst der Bagger ein verstärktes Schwenkgetriebe für das Drehen und Positionieren des Oberwagens.

Gegebenenfalls umfasst der Bagger schwenkbare Schutzaufbauten für Zugang zu Hauben am Oberwagen.

Gegebenenfalls umfasst der Bagger einen integrierten Kabelhalter für die Netzversorgung. Dieser kann schwenk- und abnehmbar sein und eine Zugentlastung aufweisen. Der Kabelhalter ist bevorzugt am Heck des Baggers, insbesondere am Heck des Oberwagens montiert.

Gegebenenfalls werden bei dem Bagger schwer entflammbares Hydrauliköl und schwer entflammbare Hydraulikschläuche eingesetzt.

Gegebenenfalls umfasst der Bagger eine Datenschnittstelle zur Übertragung von Maschinen-Betriebsdaten.

Gegebenenfalls umfasst der Bagger ein Integriertes EMV-Filter zur Entstörung der Schaltfrequenzen (AC/DC-Wandler)

Gegebenenfalls umfasst der Bagger eine optische und/oder akustische Störungsanzeige, beispielsweise ein verschiedenfarbiges Drehlicht.

Gegebenenfalls umfasst der Bagger eine verdeckt eingebaute Bedienkonsole für die Aktivierung und der Zugang zu Maschineneinstellungen und zur Störungsbehebung.

In weiterer Folge wird die Erfindung anhand der Figuren weiter beschrieben.
**Fig. 1** zeigt eine schematische Schrägansicht einer möglichen Ausgestaltung eines Baggersystems.
**Fig. 2** zeigt eine schematische Schrägansicht einer weiteren Ausführungsform eines Baggersystems mit teilweise entfernten Komponenten.
**Fig. 3** zeigt einen schematischen Aufbau von Komponenten des Baggersystems.
**Fig. 4** zeigt eine schematische Darstellung von Komponenten des Baggersystems.

Wenn nicht anders angegeben, so entsprechen die Bezugszeichen in den Figuren folgenden Komponenten:
Bagger 1, Unterwagen 2, Oberwagen 3, Ausleger 4, Arbeitswerkzeug 5, Steuerungsanordnung 6, Akku 7, Netzanschluss 8, Energiequelle 9, Multikonverter 10, Hydrauliksystem 11, Hydraulikpumpe 12, Inverter 13, DCDC-Converter 14, PDU (Power Distribution Unit) 15, Isolationswächter 16, DCDC-Converter 17, AFE (Active Front End) 18, DC-Link 19, Netzfilter 20, Kabelhalter 21, Kabel 22, Fixpunkt 23, Raupe 24, Hubarm 25, Drehlager 26, Löffelstiel 27, Schnellwechselvorrichtung 28, Kabine 29, Gegengewicht 30, Gehäuse 31, Innenraum 32, Dämpferanordnung 33, Fernsteuerung 34, Sensoranordnung 35, Datenverarbeitungseinrichtung 36, 3D-Modell 37, 3D-Arbeitsmodell 38, 3D-Vortriebsmodell 39, Bedienelement 40, Bildwiedergabevorrichtung 41, Bordnetz 42, Tunnelbrust 43, Kamera 44, Referenzpunkt 45.

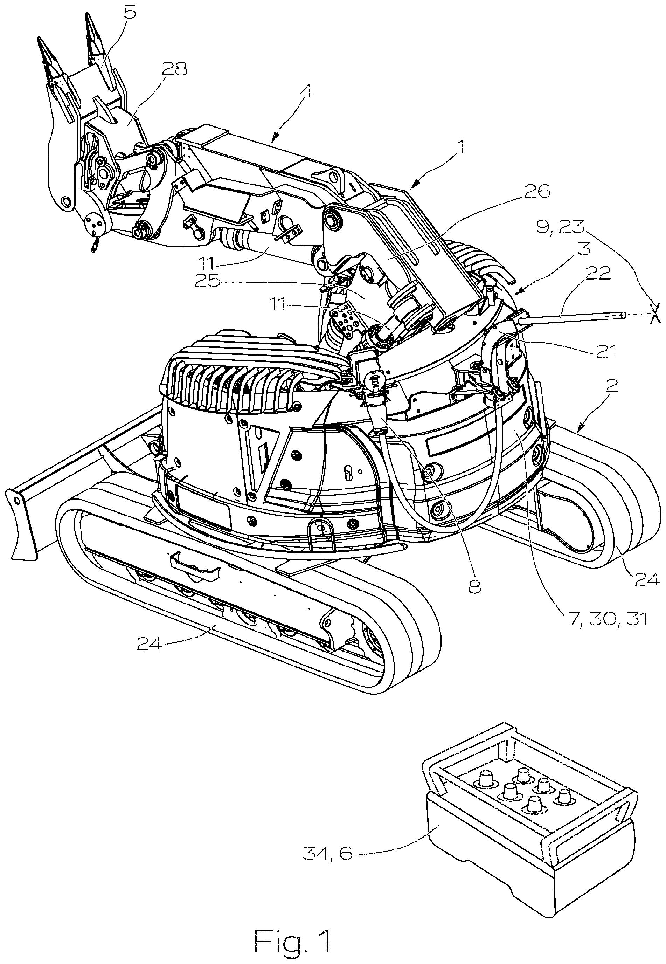

**Fig. 1** zeigt einen Bagger 1 eines Baggersystems in einer schematischen Ansicht. Der Bagger 1 umfasst einen Unterwagen 2 und einen Oberwagen 3. Gemäß einer bevorzugten Ausgestaltung kann der Oberwagen 3 gegenüber dem Unterwagen 2 in herkömmlicher Weise, beispielsweise über einen Drehkranz, drehbar bzw. schwenkbar angeordnet sein. Der Unterwagen 2 kann in herkömmlicher Weise, beispielsweise über eine Raupe 24, verfahrbar sein.

Am Oberwagen 3 ist ein Ausleger 4 mit einem Arbeitswerkzeug 5 vorgesehen. Der Ausleger 4 umfasst mehrere Komponenten und kann je nach Anwendungsbereich des Baggers 1 ausgestaltet werden.

Im vorliegenden Fall ist die Konfiguration als Tunnelbagger offenbart.

Das Arbeitswerkzeug 5 ist bevorzugt über eine Schnellwechselvorrichtung 28 am Ausleger 4 angebracht. Über die Schnellwechselvorrichtung 28 kann das Arbeitswerkzeug 5 einfach gewechselt werden. Das Arbeitswerkzeug 5 kann beispielsweise ein Vortriebslöffel, eine Vortriebsfräse oder ein Bohrhammer sein.

Bevorzugt ist ein Löffelstiel 27 vorgesehen, an dessen vorderen Ende das Arbeitswerkzeug 5 angebracht ist. Der Löffelstiel 27 kann im Falle einer Tunnelvortriebsmaschine von einem Drehlager 26 gehalten sein. Dieses Drehlager ermöglicht es, die an diesem angebrachten Komponenten, also insbesondere den Löffelstiel 27 und das Arbeitswerkzeug 5, zu schwenken, und insbesondere um +/- 45° zu verschwenken. Dadurch kann ein gewölbter Tunnelfirst effizient bearbeitet werden. Die Schwenkachse des Drehlagers 26 verläuft bevorzugt entlang einer Längsachse des Auslegers 4. Das Drehlager 26 ist bevorzugt ein Schwenklager.

Der Ausleger 4 kann einen Hubarm 25 umfassen. Dieser Hubarm 25 ermöglicht es, die auskragenden Komponenten des Auslegers 4 zu heben und zu senken. Der Hubarm 25 erlaubt bevorzugt ein Schwenken des Auslegers 4 um eine Querachse.

Bei dem Ausleger 4 und dessen Konfiguration kann es sich um einen herkömmlichen Ausleger eines Tunnelbaggers handeln.

Bevorzugt ist der Bagger 1 ein vollelektrisch betriebener Bagger, also ein Bagger 1, der keinen Verbrennungsmotor aufweist. Zur Versorgung mit elektrischer Energie umfasst der Bagger 1 einen Netzanschluss 8 und einen elektrischen Akku 7. Der Akku 7 kann der in der vorliegenden Ausführungsform im Inneren des Baggers 1 angeordnet sein.

Der Netzanschluss 8 kann über ein Kabel 22 mit der Energiequelle 9, also mit dem Stromnetz, verbunden werden. Hierzu kann in der Praxis das Kabel 22 zu einem Fixpunkt 23 geführt sein, wo es fest angebracht ist. Gegebenenfalls ist im Bereich des Fixpunktes eine Kabelrolle vorgesehen, die zwar eine Längenänderung des Kabels 22 erlaubt, die aber das Kabel 22 an einen vorbestimmten Punkt führt.

Bevorzugt umfasst der Bagger 1 einen Kabelhalter 21. Der Kabelhalter 21 ist in der vorliegenden Ausführungsform am Heck des Oberwagens 3 angebracht. Bevorzugt ist der Kabelhalter 21 derart ausgebildet, dass der Austritt des Kabels 22 aus dem Kabelhalter 21 in unterschiedlichen Stellungen des Baggers 1 Richtung Fixpunkt 23 weisen kann. In der vorliegenden Ausführungsform umfasst der Kabelhalter ein Drehgelenk, sodass die Richtung des Kabels 22 Richtung Fixpunkt 23 weisen kann, selbst wenn der Oberwagen 3 verschwenkt wird. Bevorzugt ist zwischen dem Kabelhalter 21 und dem Netzanschluss 8 eine Zugentlastung, z. B. in Form einer Kabelschlaufe vorgesehen. Die Verschwenkung des Kabelhalters 21 kann frei bzw. selbsttätig erfolgen oder es ist ein Antrieb vorgesehen, der den Kabelhalter 21 immer Richtung Fixpunkt 23 ausrichtet.

Um die Sicherheit des Baggersystems zu erhöhen, tritt das Kabel 22 aus dem Kabelhalter 21 bevorzugt in einem erhöhten Bereich aus, sodass das Kabel 22 nicht am Boden liegt, sondern entfernt vom Boden zum Fixpunkt 23 verläuft.

Der Bagger 1 umfasst bevorzugt ein Hydrauliksystem 11. Das Hydrauliksystem 11 wird bevorzugt über eine nicht sichtbare Hydraulikpumpe 12 versorgt, wobei die Hydraulikpumpe 12 eine elektrisch betriebene Hydraulikpumpe ist.

Der Bagger 1 umfasst ein Gegengewicht 30 am Heck des Oberwagens 3. Das Gegengewicht 30 dient als Gegengewicht für den Ausleger 4. Gemäß einer bevorzugten Ausführungsform umfasst das Gegengewicht ein Gehäuse 31, in dem ein Gewicht vorgesehen ist. Als Gewicht kann zumindest teilweise der Akku 7 dienen. Durch die Anordnung des Akkus 7 in dem Gehäuse 31 ist dieser vor mechanischer Deformation geschützt, wodurch die Sicherheit des Baggers 1 erhöht wird.

Das Baggersystem dieser Ausführungsform umfasst eine Steuerungsanordnung 6 mit einer Fernsteuerung 34. Über die Fernsteuerung 34 kann der Bagger 1 gesteuert werden. Im vorliegenden Fall ist der Bagger 1 ein kabinenloser Bagger 1. Er umfasst keine Kabine 29, d. h. es befindet sich bei den Vortriebsarbeiten keine Person am Bagger 1 selbst. Vielmehr kann eine Bedienperson den Bagger 1 aus einem sicheren Bereich mit der Fernsteuerung 34 fernsteuern.

Das Baggersystem weist unterschiedliche Betriebsmodi auf, die in weiterer Folge kurz erörtert werden.

In einem Netzmodus wird der Bagger mit Netzenergie betrieben. Hierfür ist das Kabel 22 mit dem Netzanschluss 8 verbunden. Dieser Betriebsmodus eignet sich beispielsweise dann, wenn der Bagger 1 selbst nicht oder nur geringfügig verfahren wird, sondern lediglich mit dem Ausleger 4 die Tunnelbrust bearbeitet wird.

Für einen größeren Bewegungsspielraum, beispielsweise wenn der Bagger 1 an einen anderen Platz verfahren werden soll, kann das Kabel 22 abgesteckt und entfernt werden. Der Bagger 1 kann dadurch flexibel und sicher bewegt werden. Als Energiequelle dient in diesem Akkumodus der Akku. Bevorzugt ist der Akkumodus derart ausgebildet, dass nicht nur ein Verfahren des Baggers 1 möglich ist, sondern dass auch eine Bearbeitung mit dem Ausleger 4 ausgeführt werden kann. Bevorzugt ist der Bagger im Akkumodus ohne Einschränkungen voll einsatzfähig. Dies gilt mit der Einschränkung, dass der Akku eine gewisse Kapazität aufweist, sodass eine zeitliche Begrenzung der vollen Funktionalität gegeben ist. Die zeitliche Begrenzung liegt beispielsweise bei mehr als 5 min, bevorzugt bei mehr als 15 min, besonders bevorzugt bei mehr als 30 min.

Das Laden des Akkus geschieht in einem Lademodus. In diesem Lademodus besteht eine Verbindung mit dem Stromnetz und das Kabel 22 ist am Netzstecker 8 angesteckt. Überschüssige, nicht benötigte Energie kann vom Netz zum Laden des Akkus verwendet werden.

Gegebenenfalls kann in allen Ausführungsformen im Netzmodus die Energie zum Betrieb des Baggersystems vom Netz und zusätzlich auch vom Akku bezogen werden. Beispielsweise können so Leistungsspitzen durch die zusätzliche Energie des Akkus abgefangen werden. Dabei kann der Akku 7 als Hauptstromquelle dienen, wobei der Akku 7 währen des Betriebs aber auch wenn der Bagger 1 nicht betrieben wird, mit Netzstrom geladen wird.

Die Umschaltung zwischen den Betriebsmodi kann manuell oder automatisch erfolgen.

Zudem ist gegebenenfalls ein Versorgungsmodus vorgesehen. In diesem Versorgungsmodus können andere Verbraucher mit der im Akku gespeicherten Energie des Baggers 1 versorgt werden.

In allen Ausführungsformen kann gegebenenfalls vorgesehen sein, dass das Baggersystem selbsttätig vom Netzmodus auf den Akkumodus umschaltet. Beispielsweise kann während der Bearbeitung durch den Bagger das Kabel abgesteckt werden und zu einem späteren Zeitpunkt wieder angesteckt werden. Dabei kommt es zu keiner Beeinträchtigung oder Einschränkung der Arbeit. Insbesondere ist dies vorteilhaft, wenn dadurch ein Stromausfall des Netzes überbrückt werden kann. Gegebenenfalls wird auch der Lademodus automatisch aktiviert, wenn überschüssige Energie vorhanden ist. Bevorzugt soll das Laden des Akkus 7 soweit wie möglich durchgängig erfolgen. Hierfür kann im Lademodus die für Verbraucher bereitgestellte Energie reduziert werden, um immer ausreichend Ladestrom zur Verfügung zu haben. Beispielsweise kann die Leistung um 10% oder um 20 % reduziert werden.

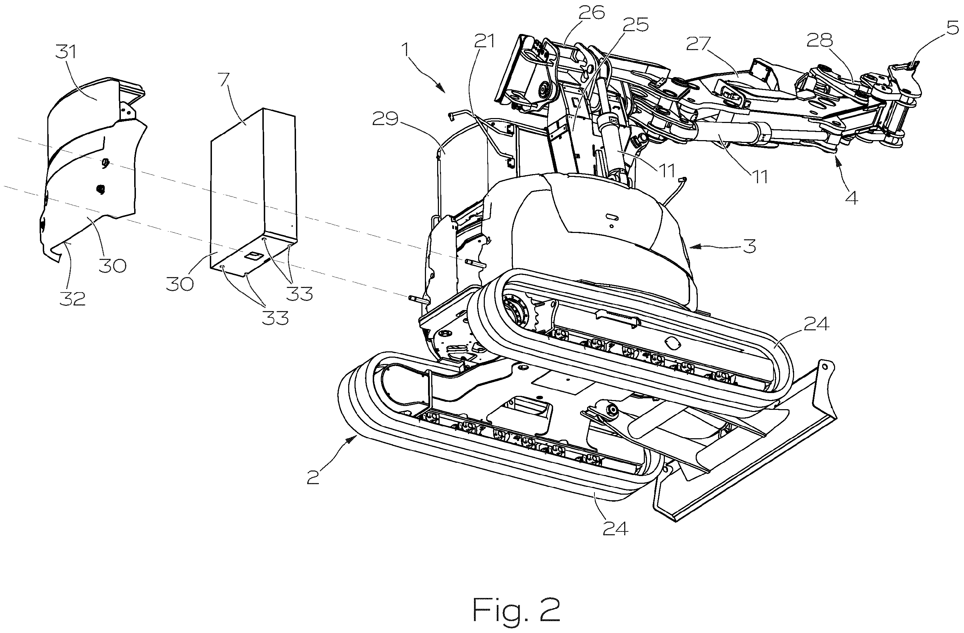

**Fig. 2** zeigt eine schematische Ansicht einer weiteren Ausführungsform eines Baggers 1 eines Baggersystems. Die bezeichneten Komponenten entsprechen im Wesentlichen den Komponenten aus Fig. 1. Im Gegensatz zu Fig. 1 umfasst der Bagger 1 der Fig. 2 eine Kabine 29. Aus dieser Kabine 29 kann eine Bedienperson den Bagger 1 bedienen. Zusätzlich zur Kabine 29 kann jedoch ebenfalls eine Steuerungsanordnung 6 mit einer Fernsteuerung 34 vorgesehen sein. Beispielsweise kann der Bagger 1 beim Verfahren in einem sicheren Bereich von der Bedienperson direkt bedient werden. Je nach Anwendung kann die Bedienperson zwischen direkter Steuerung des Baggers 1 und einer Steuerung über eine Fernsteuerung 34 wählen.

Die restlichen Funktionen des Baggersystems können den Funktionen des Baggersystems aus Fig. 1 entsprechen.

Fig. 2 zeigt eine schematische Explosionsdarstellung des Gegengewichts 30. Das Gegengewicht 30 umfasst ein Gehäuse 31 mit einem Innenraum 32. In dem Innenraum 32 kann der Akku 7 angeordnet sein. Durch das Gehäuse 31 kann der Akku 7 mit den restlichen Komponenten des Baggers 1 verbunden werden. Gegebenenfalls umfasst der Akku 7 jedoch auch eine eigene Befestigungsvorrichtung zur Befestigung am Bagger 1. Bevorzugt weist der Akku 7 eine Akkuhülle bzw. ein eigenständiges Akkugehäuse auf, sodass der Akku 7 ein einteiliges Modul ist. Gegebenenfalls können aber mehrere derartiger Akkus 7 bzw. Module eingesetzt werden.

Bevorzugt ist eine Dämpferanordnung 33 vorgesehen. Die Dämpferanordnung 33 kann beispielsweise mehrere Gummipuffer umfassen. Durch die Dämpferanordnung 33 kann der Akku 7 elastisch gedämpft am Bagger 1 angebracht sein. In der vorliegenden Ausführungsform ist die Dämpferanordnung 33 zwischen dem Gehäuse 31 und dem Akku 7 angeordnet. Bei starken Stößen, die auf den Bagger 1 wirken, ist der Akku 7 durch die Dämpferanordnung 33 in einem gewissen Maße geschützt.

Der Akku 7 ist bevorzugt ein Teil des Gegengewichts 30. Jedoch kann das Gegengewicht 30 auch noch weitere Gewichtelemente wie beispielsweise Stahlplatten umfassen. Das Gehäuse 31 kann bevorzugt lösbar mit den restlichen Komponenten des Baggers 1, insbesondere mit dem Oberwagen 3, verbunden werden. Dadurch kann ein Tausch des Akkus 7 ermöglicht sein. Beispielsweise kann ein Akku 7 auch extern geladen werden und als Wechselakku für den Bagger 1 dienen. Eine derartige Konfiguration kann in allen Ausführungsformen des Baggersystems vorgesehen sein.

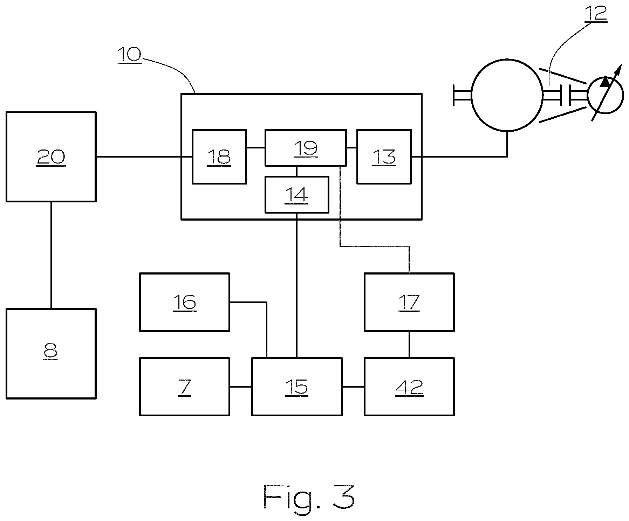

**Fig. 3** zeigt einen schematischen Schaltplan zur Erörterung der Funktion des Multikonverters 10. Insbesondere sind vorgesehen: eine Hydraulikpumpe 12, ein Inverter 13, ein DCDC-Converter 14, eine PDU (Power Distribution Unit) 15, ein Isolationswächter 16, ein DCDC-Converter 17, ein AFE-ACDC (Active Front End) 18, ein DC-Link 19, ein Netzfilter 20 mit Leistungsschalter und ein Netzanschluss 8. Zusätzlich sind noch der Akku 7 und ein 24 V DC Bordnetz 42 eingezeichnet. Die Funktion der Komponenten und insbesondere des Multikonverters ergibt sich durch den Schaltkreis bzw. dessen Komponenten selbst und aus den restlichen Teilen der Beschreibung.

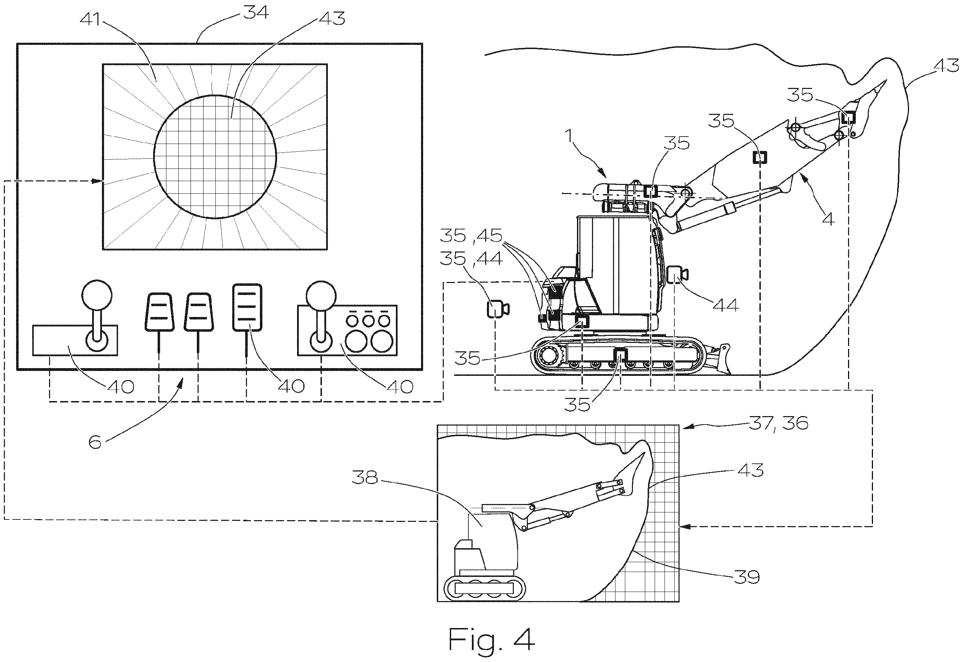

Anhand **Fig. 4** können die Funktion und der Aufbau der Steuerungsanordnung 6 beschrieben werden. Die Steuerungsanordnung gemäß dieser Ausführungsform umfasst eine Fernsteuerung 34. Die Fernsteuerung 34 weist mehrere Bedienelemente 40 auf. Die Bedienelemente 40 sind bevorzugt realen Bedienelementen eines Baggers bzw. des zu steuernden Baggers 1 nachempfunden. Dadurch kann eine Bedienperson den Bagger 1 gleich oder ähnlich steuern, als würde er in dem Bagger 1 selbst sitzen.

Die Fernsteuerung 34 umfasst in der vorliegenden Ausführungsform eine Bildwiedergabevorrichtung 41. Die Bildwiedergabevorrichtung 41 zeigt ein Bild des Arbeitsbereichs des Baggers 1 und insbesondere der Tunnelbrust 43. Das angezeigte Bild kann beispielsweise von einer Kamera 44 aufgenommen und übertragen werden, die am Bagger 1 bzw. am Oberwagen 3 angebracht ist. Insbesondere kann die Bildwiedergabevorrichtung 41 ein Live-Bild des Arbeitsbereichs des Baggers 1 anzeigen. Ähnlich einem Simulator kann eine Bedienperson den Bagger 1 durch die Fernsteuerung 34 steuern, wobei die Fernsteuerung 34 im Wesentlichen einer Kabine 29 eines Baggers 1 samt Außensicht nachempfunden ist.

Da ein zweidimensionales Bild des Arbeitsbereichs bzw. der Tunnelbrust 43 der Bedienperson gegebenenfalls nicht ausreichend Informationen zur effizienten Bearbeitung gibt, kann, wie in dem vorliegenden System, eine weitere Funktion vorgesehen sein.

Das Baggersystem umfasst bevorzugt eine Datenverarbeitungseinrichtung 36. Diese kann beispielsweise ein herkömmlicher Computer oder eine Steuerungseinheit sein. Die Datenverarbeitungseinrichtung 36 umfasst ein digitales 3D-Modell 37. Dieses 3D-Modell 37 umfasst ein 3D-Arbeitsmodell 38 und ein 3D-Vortriebsmodell 39.

Das 3D-Arbeitsmodell 38 ist eine virtuelle 3D-Modellierung des eingesetzten Baggers 1. Es werden gegebenenfalls jedoch nur wesentliche Komponenten des Baggers 1 im digitalen Modell berücksichtigt.

Der reale Bagger 1 selbst umfasst eine Sensoranordnung 35. Diese Sensoranordnung 35 erfasst die Stellung und Bewegung des Arbeitswerkzeugs 5, bevorzugt über eine Erfassung der Stellung und Bewegung der einzelnen Komponenten des Baggers.

Beispielsweise umfasst die Sensoranordnung 35 mehrere Winkelsensoren, die die Stellung der einzelnen Komponenten des Baggers 1 und insbesondere des Auslegers 4 erfassen. Die Sensoranordnung 35 kann auch einen Sensor aufweisen, der die Drehstellung des Oberwagens 3 gegenüber dem Unterwagen 2 erfasst.

Gegebenenfalls kann eine Absolutreferenz erfasst werden, sodass die Stellung des Baggers 1 bzw. eine seiner Komponenten im Raum absolut festgestellt werden kann.

Gegebenenfalls kann die Sensoranordnung 35 eine Kamera 44 umfassen, die in einem sicheren Bereich entfernt vom Bagger 1 aufgestellt ist. Am Bagger 1 selbst, insbesondere am Oberwagen 3, können optische Referenzpunkte 45 angedacht sein, die über eine optische Erfassung darüber Aufschluss geben, wie der Bagger 1 im Raum platziert ist. Gegebenenfalls kann dies auch über andere Mittel, beispielsweise über Laserscanner erfolgen.

Bevorzugt werden alle Daten zur Stellung des Arbeitswerkzeugs 5 in Echtzeit erfasst. Die Sensordaten dienen als Eingangsdaten der Datenverarbeitungseinrichtung 36 und insbesondere des 3D-Modells 37.

Über die aufgenommene Stellung und Bewegung des realen Baggers 1 kann auch das virtuelle 3D-Modell des Baggers 1, also das 3D-Arbeitsmodell 38 mit der Realität synchronisiert werden. Insbesondere ist es wichtig, dass die Bewegung bzw. die Einhüllende des Arbeitswerkzeugs 5 erfasst wird. Bevorzugt wird dies über Sensordaten zur Stellung des Auslegers 4 bzw. des Baggers 1 durchgeführt. Grundsätzlich könnte aber auch eine räumliche Erfassung der Bewegung und der Stellung des Arbeitswerkzeugs 5 ausreichend sein.

Über das 3D-Arbeitsmodell 38 kann ein 3D-Vortriebsmodell 39 erstellt werden. Auch das 3D-Vortriebsmodell 39 ist ein digitales 3D-Modell der Datenverarbeitungseinrichtung 36 bzw. des 3D-Modells 37. Das 3D-Vortriebsmodell 39 entspricht im Wesentlichen einer 3D-Modellierung des Ausbruchs und insbesondere der Tunnelbrust 43. Das 3D-Vortriebsmodell 39 kann insbesondere dadurch erstellt werden, dass die Einhüllende der Bewegungskontur des Arbeitswerkzeugs 5 verwendet wird und angenommen wird, dass die Kontur im Wesentlichen dem Ausbruch entspricht.

Ähnlich der Erstellung eines 3D-CAD-Modells, kann somit durch geometrische Subtraktion des virtuell bewegten Arbeitswerkzeugs 5 die dreidimensionale Form des Ausbruchs bzw. der Tunnelbrust 43 errechnet werden.

Dieses 3D-Modell, insbesondere das 3D-Vortriebsmodell 39, kann auf der Bildwiedergabevorrichtung 41 angezeigt werden.

Insbesondere kann das 3D-Modell im Sinne einer Augmented-Reality-Darstellung mit einem Live-Kamerabild im Wesentlichen in Echtzeit überlagert werden. Dadurch erhält die Bedienperson auf der Bildwiedergabevorrichtung 41 ein Kamerabild und/oder eine 3D-Darstellung des Arbeitsbereichs und insbesondere der Tunnelbrust 43. Basierend auf dem Bild der Bildwiedergabevorrichtung 41 kann die Bedienperson über die Bedienelemente 40 den Bagger 1 steuern.

## Patentansprüche

1. **Baggersystem,** insbesondere Tunnelvortriebssystem, umfassend:
- einen **Bagger** (1) mit einem fahrbaren Unterwagen (2), einem bewegbar am Unterwagen angebrachten Oberwagen (3) und einem am Oberwagen bewegbar angebrachten Ausleger (4) zum Einsatz eines Arbeitswerkzeugs (5),
- und eine **Steuerungsanordnung** (6) zur Steuerung des Baggers (1) und seines Auslegers (4),
- wobei der Bagger (1) einen elektrischen Akku (7), einen Netzanschluss (8) zur Verbindung mit einer externen elektrischen Energiequelle (9) und einen Multikonverter (10) mit mehreren Betriebsmodi aufweist,
- wobei der Multikonverter (10) wahlweise in einem **Netzmodus** betreibbar ist, in dem die Energie zum Betrieb des Baggers (1) und insbesondere zur Bewegung des Unterwagens (2), des Oberwagens (3) und des Auslegers (4), bevorzugt direkt, vom Netzanschluss (8) bezogen wird,
- wobei der Multikonverter (10) wahlweise in einem **Akkumodus** betreibbar ist, in dem die Energie zum Betrieb des Baggers (1) und insbesondere zur Bewegung des Unterwagens (2), des Oberwagens (3) und des Auslegers (4) vom Akku (7) bezogen wird,
- und wobei der Multikonverter (10) wahlweise in einem **Lademodus** betreibbar ist, in dem der Akku (7) mit überschüssigem, nicht zum Betrieb des Baggers (1) benötigtem oder verwendetem, Netzstrom geladen wird.

2. Baggersystem nach Anspruch 1, **dadurch gekennzeichnet, dass** der Multikonverter (10) wahlweise in einem **Versorgungsmodus** betreibbar ist, in dem im Akku (7) gespeicherte Energie über einen Versorgungsanschluss anderen Verbrauchern zur Verfügung gestellt wird.

3. Baggersystem nach Anspruch 1 oder 2, **dadurch gekennzeichnet, dass** der Bagger (1) vollelektrisch betrieben ist und die benötigte Energie zur Bewegung des Unterwagens (2), des Oberwagens (3) und des Auslegers (4) ausschließlich über den Netzanschluss (8) von einer externen elektrischen Energiequelle (9) und/oder über den Akku (7) bezieht.

4. Baggersystem nach einem der Ansprüche 1 bis 3, **dadurch gekennzeichnet,**
- **dass** der Bagger (1) zur Bewegung des Unterwagens (2), des Oberwagens (3) und des Auslegers (4) ein Hydrauliksystem (11) umfasst,
- **dass** das Hydrauliksystem (11) eine Hydraulikpumpe (12) zur Herstellung des Hydrauliksystemdrucks aufweist,
- und **dass** die Hydraulikpumpe (12) rein elektrisch angetrieben und über den Multikonverter (10) mit Strom versorgt ist.

5. Baggersystem nach Anspruch 4, **dadurch gekennzeichnet,**
- **dass** der Multikonverter (10) eine insbesondere als Inverter (13) ausgebildete Motorsteuerung für die Hydraulikpumpe (12) aufweist,
- wobei die Motorsteuerung Motorparameter wie Leistung, Drehzahl, Motordrehmoment und/oder Parameter der Verstellpumpe steuert bzw. regelt.

6. Baggersystem nach einem der Ansprüche 1 bis 5, **dadurch gekennzeichnet, dass** der Multikonverter (10) einen DCDC-Konverter (14) zur Regelung der Akkuversorgung in beide Richtungen also zum Laden und zum Entladen des Akkus (7) aufweist.

7. Baggersystem nach einem der Ansprüche 1 bis 6, **dadurch gekennzeichnet,**
- **dass** der Bagger (1) einen Kabelhalter (21) zur Halterung des Kabels (22) für den Netzanschluss (8) aufweist,
- **dass** der Kabelhalter (21) schwenkbar am Oberwagen (3) angebracht ist und in Richtung eines entfernt vom Bagger (1) vorgesehenen Fixpunktes (23) der Anbringung des Kabels (22) ausgerichtet bleibt, wenn sich der Oberwagen (3) bewegt.

8. Baggersystem nach einem der Ansprüche 1 bis 7, **dadurch gekennzeichnet,**
- **dass** der Bagger (1) als Tunnelbagger ausgebildet ist,
- und/oder dass der Unterwagen (2) insbesondere über Raupen (24) fahrbar ist,
- und/oder dass der Oberwagen (3) gegenüber dem Unterwagen (2) um eine Hochachse schwenkbar angeordnet ist,
- und/oder dass der Ausleger (4) ein Tunnelausleger für Vortriebsarbeiten in kleinen Querschnitten ab 6 m² Querschnittsfläche ist, - und/oder dass der Ausleger (4) einen Hubarm (25) zum Anheben und Absenken des Auslegers (4) umfasst,
- und/oder dass der Ausleger (4) Drehlager (26) zum Verschwenken des Auslegers (4) um eine Längsachse umfasst,
- und/oder dass der Ausleger (4) einen Löffelstiel (27) umfasst,
- und/oder dass der Ausleger (4) eine Schnellwechselvorrichtung (28) zur lösbaren Befestigung eines Arbeitswerkzeugs (5) umfasst,
- und/oder dass der Ausleger (4) das Arbeitswerkzeug (5) und insbesondere einen Vortriebslöffel oder eine Vortriebsfräse umfasst,
- und/oder dass der Bagger (1) eine Kabine (29) für eine Person umfasst oder kabinenlos ausgebildet ist.

9. Baggersystem nach einem der Ansprüche 1 bis 8, **dadurch gekennzeichnet,**
- **dass** der Bagger (1) ein Gegengewicht (30) für den Ausleger (4) umfasst,
- und **dass** der Akku (7) ein Teil des Gegengewichts (30) ist.

10. Baggersystem nach Anspruch 9, **dadurch gekennzeichnet,**
- **dass** das Gegengewicht (30) ein Gehäuse (31) mit einem Innenraum (32) umfasst,
- **dass** der Akku (7) im Innenraum (32) angeordnet oder anordenbar ist und von dem Gehäuse (31) geschützt ist,
- insbesondere dass eine Dämpferanordung (33) vorgesehen ist, über die der Akku (7) schwingungsgedämpft am Bagger (1) bzw. im Gehäuse (31) angebracht ist.

11. Baggersystem nach einem der Ansprüche 1 bis 10, **dadurch gekennzeichnet, dass** die Steuerungsanordnung (6) eine Fernsteuerung (34), insbesondere eine Funkfernsteuerung bzw. Telefernsteuerung, zur Steuerung des Baggers (1) umfasst.

12. Baggersystem nach einem der Ansprüche 1 bis 11, **dadurch gekennzeichnet,**
- **dass** die Steuerungsanordnung (6) eine Sensoranordnung (35) zur Erfassung der Lage und Bewegung des Arbeitswerkzeugs (5) umfasst,
- wobei die Sensoranordnung (35) bevorzugt zur Erfassung der Stellung des Baggers (1), insbesondere der Stellung des Auslegers (4), des Oberwagens (3) und gegebenenfalls des Unterwagens (2) ausgebildet ist.

13. Baggersystem nach einem der Ansprüche 1 bis 12, **dadurch gekennzeichnet,**
- **dass** die Steuerungsanordnung (6) ein auf einer Datenverarbeitungseinrichtung (36) erzeugtes digitales 3D-Modell (37) umfasst,
- **dass** das 3D-Modell (37) ein 3D-Arbeitsmodell (38) der, insbesondere durch die Sensoranordnung (35) aufgenommenen, realen Bewegung des Arbeitswerkzeugs (5) umfasst,
- und **dass** das 3D-Modell (37) ein aus dem 3D-Arbeitsmodell (38) errechnetes, den Arbeitsfortschritt, insbesondere den Tunnelausbruch, simulierendes 3D-Vortriebsmodell (39) umfasst.

14. Baggersystem nach einem der Ansprüche 11 bis 13, **dadurch gekennzeichnet,**
- **dass** die Fernsteuerung (34) Bedienelemente (40) zur Steuerung des Baggers (1) umfasst,
- wobei die Bedienelemente (40) bevorzugt den realen Bedienelementen (40) eines oder des Baggers (1) nachgebildet sind oder entsprechen,
- und insbesondere dass die Fernsteuerung (34) eine Nachbildung der für die Steuerung wesentlichen Elemente der Kabine (29) eines oder des Baggers (1) ist.

15. Baggersystem nach einem der Ansprüche 11 bis 14, **dadurch gekennzeichnet,**
- **dass** die Fernsteuerung (34) eine Bildwiedergabevorrichtung (41) wie insbesondere einen Monitor oder eine VR-Brille umfasst,
- **dass** auf der Bildwiedergabevorrichtung (41) ein Bild des Arbeitsbereichs des Baggers (1) angezeigt wird, das beispielsweise von einer am Bagger angebrachten Kamera (44) in Echtzeit an die Bildwiedergabevorrichtung (41) übertragen wird,
- und **dass** auf der Bildwiedergabevorrichtung (41) gegebenenfalls zusätzlich ein Abbild des 3D-Vortriebsmodells (39) des Arbeitsbereichs des Baggers (1) angezeigt wird,
- insbesondere dass das Bild des Arbeitsbereichs von dem Abbild des 3D-Vortriebsmodells (39), bevorzugt im Wesentlichen in Echtzeit, überlagert ist,
- gegebenenfalls, dass am Bagger (1) oder im Bereich des Baggers (1) ein Mikrofon vorgesehen ist, das ein Arbeitsgeräusch des Baggers (1) an die Fernsteuerung (34) bzw. an eine Tonwiedergabevorrichtung der Fernsteuerung (34) überträgt, um der Bedienperson akustische Informationen zu übermitteln,
- gegebenenfalls, dass die Fernsteuerung (34) eine Bewegungsvorrichtung wie einen Drehteller und/oder einen Hexapod umfasst, die die Bedienperson bzw. die Kabine der Fernsteuerung (34) bewegt, um eine realitätsnahe Steuerung des Baggers zu simulieren.
